# EUROPEAN PATENT SPECIFICATION

(11) **EP 1 175 102 B1**
(45) Date of publication and mention of the grant of the patent: **13.04.2011**
(21) Application number: 01306255.9
(22) Date of filing: 20.07.2001
(51) Int. Cl.: H04N 9/78

(54) **Improvements relating to chrominance selective filtering for use in colour video signal decoding**
Selektive Chrominanzfilterung für Farbvideosignaldekodierung
Filtrage sélectif de chrominance à utiliser dans le décodage de signal vidéo couleur

(30) Priority: 20.07.2000 GB 0017903
(43) Date of publication of application: 23.01.2002
(73) Proprietor: BRITISH BROADCASTING CORPORATION, London W1A 1AA (GB)
(72) Inventor: Easterbrook, James Edward, Sutton, Surrey SM1 2TY (GB)
(74) Representative: Robson, Aidan John

(56) References cited:
- EP-A- 0 690 632
- DREWERY J O: "THE FILTERING OF LUMINANCE AND CHROMINANCE SIGNALS TO AVOID CROSS-COLEUR IN A PAL COLOUR SYSTEM" BBC ENGINEERING, BBC PUBLICATIONS, LONDON, GB, no. 104, 1 September 1976 (1976-09-01), pages 8-39, XP000607366 ISSN: 0308-2369

## Description

### Background of the Invention

This invention relates to chrominance selective filtering. The invention is particularly, though not exclusively, suitable for use in composite colour video signal decoding, especially PAL (Phase Alternate Line) decoders for use in television or at least video decoders.

The simplest form of chrominance filter for separating the chrominance component from a composite PAL signal is a band-pass filter. Various improved chrominance filters for PAL decoders have however been proposed. One example is a fixed multi-dimensional filter and is described in BBC Research Department Report No. 1988/11, Clarke, C.K.P., Multi-dimensional filter design for chrominance-luminance separation, November 1988. Such improved filters provide advantages but have material imperfections and when used in a PAL decoder still introduce undesired impairments. Some improved decoders make use of motion compensation. However, motion-compensated proposals in particular are prone to large errors if the motion estimation is not sufficiently accurate.

European Patent Application, EP 0,690,632 and corresponding United States Patent 5,621,477 describe the use in a PAL decoder of a chrominance selective filter which includes a Hadamard transform. This operates only on a narrow band around the colour subcarrier frequency to select the composite colour component. It is stated that the Hadamard transform function can be replaced by a Fourier transform.

### Summary of the Invention

The invention in its various aspects is defined in the independent claims below, to which reference should now be made. Advantageous features are set forth in the appendant claims.

A preferred embodiment of the invention is described in more detail below with reference to the drawings. This preferred embodiment takes the form of a chrominance selective filter for filtering a sampled composite colour video signal to extract the composite chrominance component therefrom, which includes a Fourier transform circuit to convert a received sampled composite colour video signal from the time domain to the frequency domain and thereby provide a plurality of multi-dimensional frequency components. A transform domain filter differentially changes the amplitudes of some of the frequency components relative to the others, without changing the phase information, and an inverse Fourier transform circuit converts back from the frequency domain to the time domain. The transform domain filter changes the component amplitudes so as to select frequency components at least predominantly representing the composite chrominance component. This is done for a given component by locating the component which is in multi-dimensional frequency space at a mirror image position about a colour subcarrier, and setting the amplitude of the larger of the two components to that of the smaller component. The filter may operate in two dimensions (horizontal-vertical) or in three dimensions (horizontal-vertical-temporal).

As an alternative to the Fourier transform, other transforms such as the Hadamard transform may be used. Alternatively, the signal may be separated into multi-dimensional frequency components in other ways. For example, 2-D or 3-D filters may be used, or one-dimensional filters may be cascaded to achieve the same effect. In any event, the signal is separated into a plurality of multi-dimensional frequency components before being filtered by the transform domain filter

The chrominance selective filter may be used in a PAL decoder, having a subtracter which receives an input sampled composite colour video signal at its non-inverting input and the output of the filter at its inverting input, the filter also receiving the sampled composite colour video signal as an input. The filter output is the chrominance signal and the subtracter output is the luminance signal.

### Brief Description of the Drawings

The invention will now be described in more detail, by way of example, with reference to the drawings, in which:
**Figure 1** is a block circuit diagram showing a known complementary PAL decoder;
**Figure 2** is a block circuit diagram of a PAL decoder using a Fourier domain chrominance filter embodying the present invention;
**Figure 3** is a diagram showing the horizontal-vertical spectrum of a PAL signal, illustrating the operation of the decoder of Figure 2 with a 2-dimensional (2-D) filter;
**Figure 4** is a block circuit diagram of a circuit used in the decoder of Figure 2;
**Figure 5** is a diagram showing the vertical-temporal spectrum of a PAL signal, illustrating the operation of the decoder of Figure 2 with a 3-dimensional (3-D) filter; and
**Figure 6** is a diagram showing the vertical-temporal spectrum of a PAL signal with interval displacement of fields prior to the Fourier transform.

### Detailed Description of the Preferred Embodiment

Much of the archive material held by broadcasters and others is still stored in PAL composite format. Before this material can be broadcast on a digital network the PAL signals must be decoded. This inevitably has introduced some residual cross-effects, in particular dot patterns and false colours. The existence of these cross-effects means that a higher bit rate is required for accurate digital transmission.

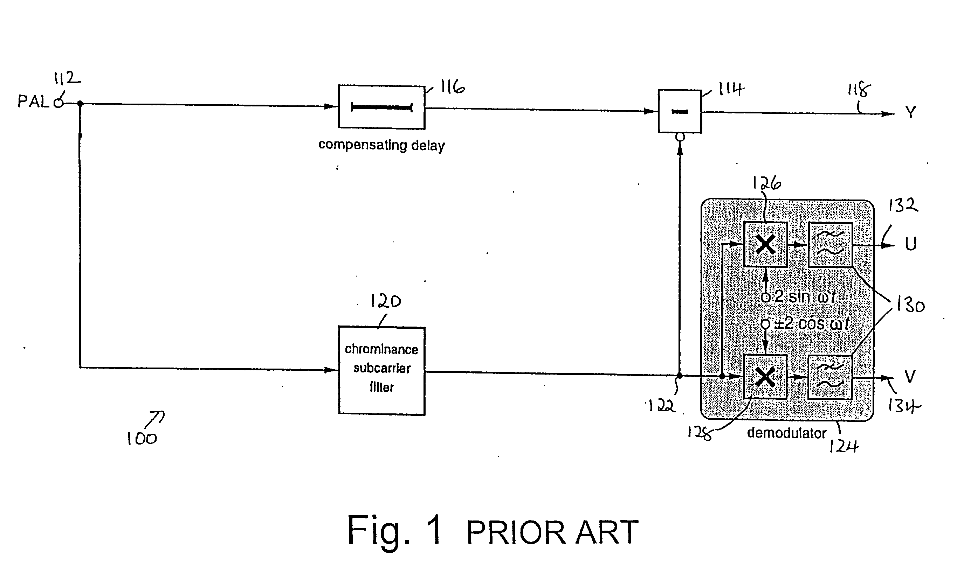

One known PAL decoder based on the analogue PAL decoder described in United Kingdom Patent Specification 1,482,079 is illustrated in Figure 1 of the accompanying drawings. The decoder 100 shown in Figure 1 has an input 112 for receiving a composite colour video signal in the form of a PAL signal to which is connected a chrominance subcarrier filter 120. The filter 120 is a frequency selective filter which selects the frequencies which contain predominantly chrominance rather than luminance information. A subtracter 114 is connected to receive the output of the filter 120 at its inverting input, and the PAL input signal, after passing through a compensating delay 116 which compensates for the delay in the filter 120, at its non-inverting input. The output 118 of the subtracter 116 constitutes the luminance signal and the output 122 of the filter 120 constitutes the composite chrominance signal. This latter signal is then demodulated in a demodulator 124 in one of a number of possible known ways. As shown, the composite chrominance signal is applied to two multipliers 126, 128 which receive signals at colour subcarrier frequency. The two signals are in phase quadrature, with one multiplier receiving an in-phase signal and the other multiplier receiving a quadrature-phase signal, the phase of which is inverted on alternate lines in accordance with the PAL system. The multiplier outputs are then low-pass filtered by low-pass filters 130 to provide the U and V output signals 132 and 134.

In this "complementary" decoder shown in Figure 1, the PAL signal is filtered in the filter 120 with the intention of isolating the modulated chrominance. This is then subtracted from the PAL signal in the subtracter 114 to give "clean" luminance, and demodulated to give "clean" colour components.

In its simplest form, the chrominance subcarrier filter 120 shown in Figure 1 is a horizontal band-pass filter centred on subcarrier frequency *f*_{sc}. Better results can be obtained by using a 2 dimensional (horizontal-vertical) filter or a 3 dimensional (horizontal-vertical-temporal) filter, as *f*_{sc} has vertical components at 72 c/aph (cycles per active picture height) and 216 c/aph and temporal components at 6.25 Hz and 18.75 Hz.

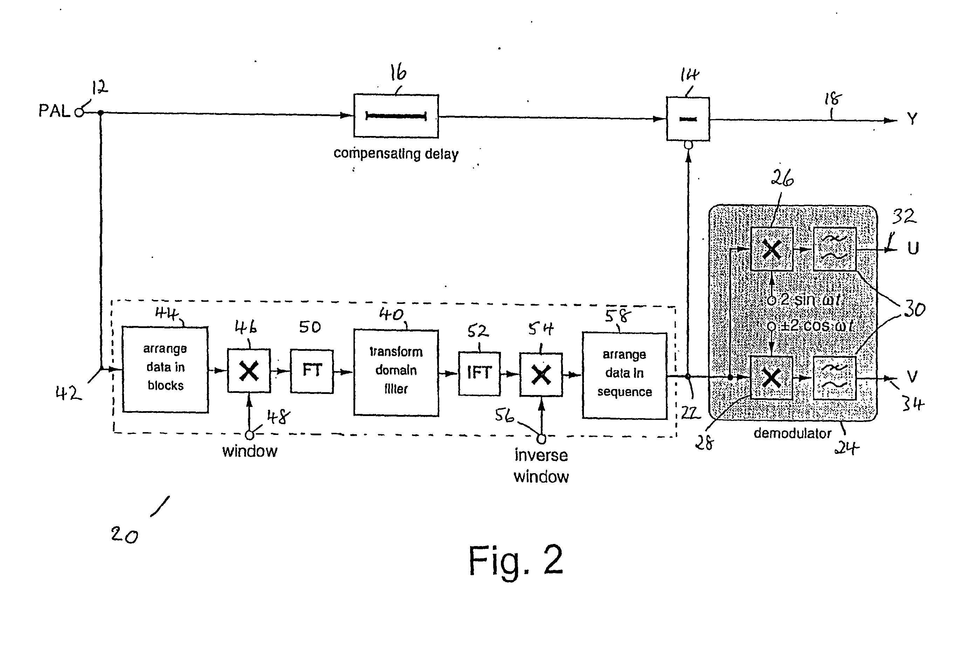

Figure 2 illustrates an embodiment of the present invention in which the chrominance selective filter 120 of Figure 1 is replaced by a chrominance selective filter 20 embodying the present invention. Except for the chrominance filter, the circuit of Figure 2 is the same as Figure 1.

Thus the PAL decoder 10 of Figure 2 has an input 12 for receiving a composite PAL signal to which is connected a chrominance subcarrier filter 20, the construction of which is described below. A subtracter 14 is connected to receive the output of the filter 20 at its inverting input, and the PAL input signal, after passing through a compensating delay 16 which compensates for the delay in the filter 20, at its non-inverting input. The output 18 of the subtracter 16 constitutes the luminance signal and the output 22 of the filter 20 constitutes the composite chrominance signal. As with Figure 1, this latter signal is then demodulated in a demodulator 24 in one of a number of possible known ways. As shown, the composite chrominance signal is applied to two multipliers 26, 28 which receive signals at colour subcarrier frequency. The two signals are in phase quadrature, with one multiplier receiving an in-phase signal and the other multiplier receiving a quadrature-phase signal, the phase of which is inverted on alternate lines in accordance with the PAL system. The multiplier outputs are then low-pass filtered by low-pass filters 30 to provide the U and V output signals 32 and 34.

The filter 20 embodying the invention and shown in Figure 2 filters the PAL signal in the Fourier transform domain. The filtering is effected by a Fourier transform domain filter circuit 40, as described below. The filter 20 operates with digital signals. The filter 20 has an input 42 connected to the input 12 of the PAL decoder 10 to receive a digital composite chrominance signal. To the input 42 is connected a circuit 44 which arranges the incoming data into blocks. A multiplier 46 is connected to the output of the data arranging circuit 44 and receives a window signal at an input 48. The multiplier is arranged to reduce the effect of black edges. The output of the multiplier 46 is then applied to a Fourier transform circuit 50, conveniently implemented as a fast Fourier transform or FFT circuit. The transformed signal from the Fourier transform circuit 50 is then applied to the transform domain filter circuit 40. The operation of the transform domain filter circuit 40 is described below.

The output of the transform domain filter circuit 40 is then reverse processed and is applied to an inverse Fourier transform circuit 52 also conveniently implemented as an FFT, a second multiplier 54 receiving a window signal at an input 56, and a data arranging circuit 58 which rearranges the data from blocks back into a sequence corresponding to that received at the input 42. The (forward) Fourier transform and the inverse Fourier transform could, in principle, be rearranged. The output 22 of the data arranging circuit 58 constitutes the output ot the filter 20.

Unlike the circuit of Figure 1, the circuit of Figure 2 requires the PAL signal to be in digital form or at least to be sampled. A good choice of sampling frequency is four times the colour subcarrier frequency *f*_{sc}, viz. 1*f*_{sc}.

In the circuit of Figure 2, the incoming PAL signal is firstly rearranged into 2 or 3 dimensional blocks in the data arranging circuit 44. The blocks may have some degree of overlap if desired. The samples are then multiplied in the multiplier 46 by a window function received at input 48, to reduce the effects of block edges, before being transformed into "frequency space" by a discrete Fourier transform applied to each block by the Fourier transform circuit 50. A Fourier transform is an example of a time domain to frequency domain transform. The transform domain filter 40 then modifies some or all of the samples in a block, before it is converted back to "signal space" by an inverse Fourier transform in the inverse Fourier transform circuit 52. After multiplying by the inverse of the window function in the multiplier 54, the samples are put back into the correct time order in the data arranging circuit 58. If the blocks have overlap, then some form of averaging or "cross-fading" may be used to combine samples from adjacent blocks.

As an alternative to the Fourier transform, other transforms such as the Hadamard transform may be used. Alternatively, the signal may be separated in multi-dimensional frequency components in other ways. For example, 2-D or 3-D filters may be used, or one-dimensional filters may be cascaded to achieve the same effect. In any event, the signal is separated into a plurality of multi-dimensional frequency components before being filtered by the transform domain filter 40.

Where the incoming PAL signal is interlaced, as will be the case with normal broadcast television signals for example, lines of zero samples are inserted, so as to make an orthogonal sampling structure, before temporal Fourier transforms can be applied. This doubles the amount of data to be processed, but the spectral repeat at (288 c/aph [cycles per active picture height], 25 Hz) enables some efficiency improvement by only processing half of the transform domain data.

Alternatively, prior to taking the Fourier transform successive fields can be vertically displaced, the displacement increasing or decreasing at one picture line per field interval. This displacement may be reset to zero at the start of each block. An opposite displacement is applied after the inverse Fourier transform.

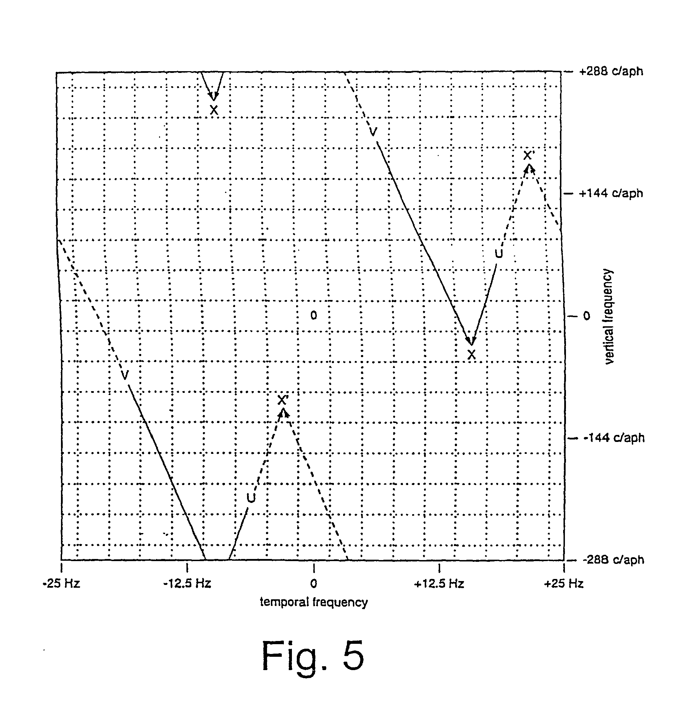

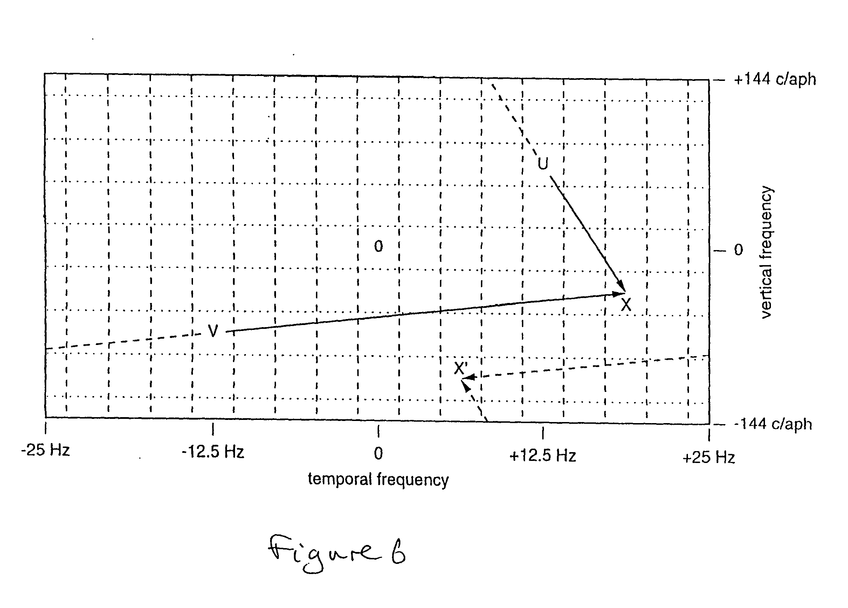

In effect this means that we are not using an orthogonal structure for the Fourier Transform. The effect of this displacement in frequency space is to offset the temporal frequency by an amount proportional to the vertical frequency. The U subcarrier at (+72 c/aph, +18¾ Hz) is moved to (+72 c/aph, +12½ Hz) and the V subcarrier at (-72 c/aph, -18¾ Hz) is moved to (-72 c/aph, -12½ Hz). This is shown in Figure 6 which is equivalent to Figure 5.

Although the displacement changes temporal frequencies, all the symmetries still hold and so the method still works, as illustrated in the attached figure. The overhead of inserting lines of zero before forming the Fourier transform is removed, a significant saving in hardware costs.

Using Fourier transforms as described above has some disadvantages. The circuit is relatively complex, and the use of blocks may produce visible artefacts. However, we have appreciated that it offers one great advantage over the conventional circuit of Figure 1, namely that the filter characteristic can easily be varied, in particular according to the spectrum of the incoming signal.

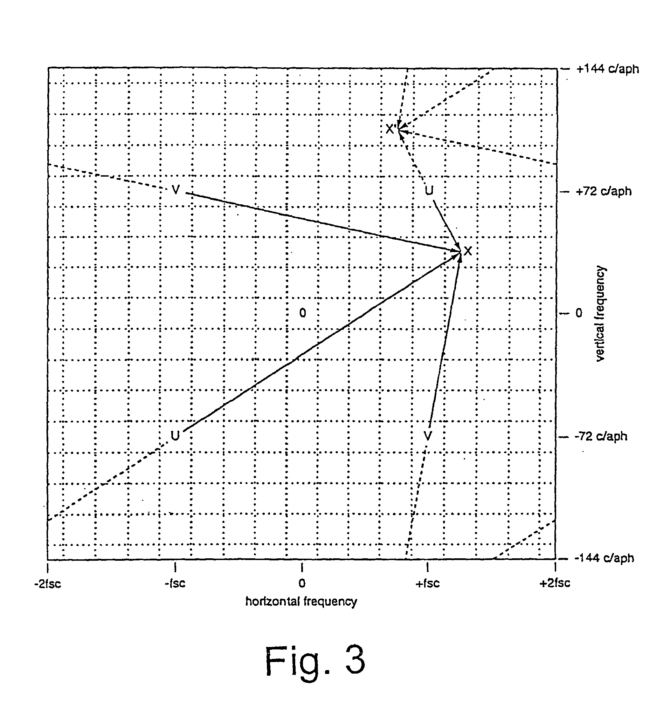

Figure 3 is a diagram illustrating the horizontal-vertical spectrum of a PAL signal, more particularly it represents the 2-D Fourier transform of one field of a 4*f*_{sc} sampled PAL signal. The dotted grid lines represent the boundaries between Fourier transform samples, assuming a block size of 16 x 16 samples. The following specific points may be seen on the Figure:
zero frequency 0 is at the centre,
the U colour subcarrier is at: (+*f*_{sc}, +72 c/aph) and (-*f*_{sc}, -72 c/aph) and
the V subcarrier is 144 c/aph away, at:
   (+*f*_{sc}, -72 c/aph) and (-*f*_{sc}, +72 c/aph).

After passing through a 2-D FFT circuit, the separate frequency components of the signal will be available and may be plotted on a Figure like Figure 3. Consider an arbitrary frequency shown at X in Figure 3. This Fourier sample could contain some combination of luminance, modulated U and modulated V, although each of these would generally have a different baseband frequency. If the sample contained only modulated U, then the same amount of modulated U should be present in the sample X', which is the "mirror" of X about the U carrier (+*f*_{sc}, +72 c/aph). Similarly, if the sample contained only modulated V, then the same amount of modulated V should be present in the sample X', which is also the mirror of X about the V carrier (+*f*_{sc}, -72 c/aph). It will be appreciated that the Fourier transform is periodic, and this diagram shows just one "cycle". If you "go off the edge" then you reappear at the opposite side. Note that X and X' are also mirror pairs about the two other carriers (-*f*_{sc}, +72 c/aph) and (*f*_{sc}, -72 c/aph).

In practice, the modulated U and V signals are not completely symmetric about their subcarriers, as the composite PAL signal is usually low-pass filtered with a cut frequency of about 5.5 MHz.

We have appreciated that the Fourier transform domain signal can be filtered by differentially changing the amplitudes of some of the frequency components. The phases should however not be altered.

We have furthermore appreciated that the symmetries described in relation to Figure 3 make it possible to construct a chrominance filter in the following manner. In this preferred chrominance filter, the magnitude of each Fourier sample is compared with that of its "mirror" sample. The magnitude of both of these samples are then set to the smaller of the pair. In this way components which at least predominantly represent chrominance are selected. This simple method has been found to provide remarkably good results for a PAL decoder with no temporal processing.

As described the mirroring has taken place about the U subcarrier. However, due to the cyclic nature of the Fourier transform, as noted above, each sample has just one mirror, regardless of which subcarrier is chosen. Accordingly the same result is achieved by mirroring about the V subcarrier.

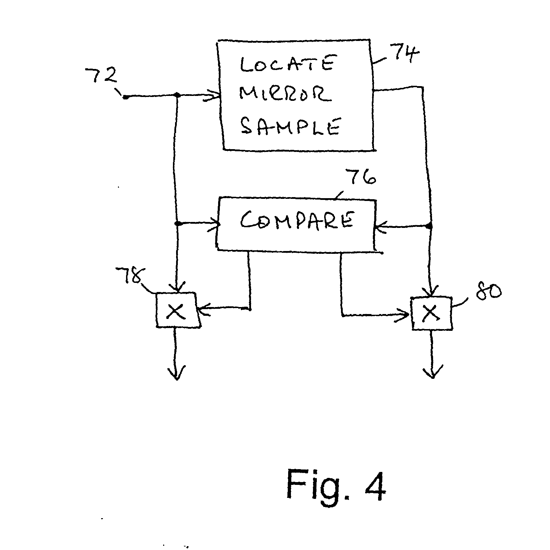

Figure 4 shows in diagrammatic form a circuit 70 for determining the smaller of the two subcarriers and replacing the larger amplitude of the two by the smaller amplitude, in accordance with the method illustrated in Figure 3. The phase is not however changed. A component frequency is received at an input 72 and a circuit 74 locates the component which is at the mirror image position about the subcarriers. The values of the amplitudes of these two components is compared in a circuit 76 which determines which of the two is the smaller and the ratio of the amplitudes of the two components. It provides two outputs to two respective multipliers 78, 80, associated with the two components respectively. The output to the one of the multipliers associated with the smaller of the two components is a unity multiplying factor. The output to the other of the two multipliers 78, 80, the one associated with the component of larger amplitude, conveys a multiplying factor less than unity dependent upon the ratio of amplitudes determined in circuit 76. This has the effect of reducing the amplitude of the larger component to that of the smaller component. The phases of the signals are unaffected. In practice the circuit 70, as with other circuits described, may be implemented in software, in which case the figure should be regarded as a flowchart rather than a hardware block diagram.

As an alternative to the arrangement of Figure 4, if the comparison between the two components indicates that the ratio of one to the other falls below a predetermined threshold then both are discarded. This is achieved by setting them to zero. The threshold used is partially picture dependent but one example is to discard both if one component has an amplitude of less than 40% of the other. Other values may be used but it is preferable for a hardware decoder to have a single fixed value.

There are two areas where this simple decoder may fail. Firstly, low pass filtering of the PAL signal to 5.5 MHz creates an asymmetric modulated chrominance spectrum. Frequencies that have been attenuated are no longer the same amplitude as their "mirrors". Consequently these will be decoded as luminance. This may produce visible patterning, and the decoded chrominance bandwidth is restricted to 1.1 MHz. Secondly, if the baseband chrominance contains both U and V at a vertical frequency of ±72 c/aph, then after modulation the -72 c/aph U has the same frequency as the +72 c/aph V, and vice versa. This can produce an asymmetry in the magnitudes of the Fourier components, so this chrominance also appears as cross luminance. The second of these two effects can be quite visible on vertical colour transitions (e.g. the horizontal edges in a colour patches test pattern) unless they are bandwidth limited.

Figure 5 shows a vertical-temporal slice through the 3-D spectrum of a PAL signal. Note that the slice is at a horizontal frequency of +*f*_{sc}; a slice at -*f*_{sc} would look similar but the locations of the U and V subcarriers would be swapped.

Clearly, each U and V subcarrier in Figure 5 is its own reflection in any of the subcarriers. There is another set of frequencies with the property, 25Hz away from the subcarriers, for example (+72 c/aph, -6¼ Hz). Energy at these frequencies will be demodulated as colour with a 25 Hz component - this might be a genuine signal, but is more likely to be cross-colour. A variation of the decoder design is to force these samples to zero, so they will always be interpreted as luminance.

As in Figure 3, X is an arbitrary frequency, and X' is its mirror about the U carrier at (+72 c/aph, +18.75 Hz). Because the PAL signal is interlaced, every Fourier sample is repeated at a distance of (±288 c/aph, ±25 Hz) so X and X' each appear twice, as do the U and V subcarriers. As before, X' is also the mirror of X about all the other carriers. To keep the diagram simple, half of the arrows that could be drawn have been omitted, and thus only half are shown.

These symmetries enable the 2-D transform domain filter described above with reference to Figure 3 to be extended to 3 dimensions. This completely cures the problem the 2-D filter has with chrominance at frequencies around ±72 c/aph, because the U and V carriers have different temporal frequencies, except when there is a temporal transient such as a shot change. When this happens the signals are spread across all temporal frequencies, and the 3-D filter reduces to a 2-D filter with the same horizontal and vertical block size.

The preferred block size to be set by the data arranging circuit 44 of Figure 2 will now be considered. One option is to set the block size by requiring a Fourier sample to be centred on a colour subcarrier. The PAL signal is sampled at 4*f*_{sc}, so the minimum horizontal block size is 4. For a 2-D filter the vertical sampling frequency is 288 c/aph, and subcarrier is at 72 c/aph, so the block size is 4 field lines. For a 3-D filter the vertical sampling frequency is 576 c/aph, so the block size is 8 picture lines. The temporal block size, for a 3-D filter, is 8 fields, as the temporal sampling frequency is 50 Hz, and subcarrier is at 6.25 Hz (and 18.75 Hz).

We have found that when using this block size each Fourier sample contains a wide range of frequencies (particularly when the effects of "leakage" are considered) and it is unlikely that any Fourier sample would contain only luminance or only chrominance.

The method also works if the boundary between blocks is centred on a subcarrier instead since this arrangement is also symmetric. In this case we can have a 3-D version with blocks as small as 4 samples x 2 field lines x 2 fields with the fields displaced as described above.

The upper limit to the block size is set by the picture dimensions (a 4*f*_{sc} sampled PAL frame has 576 lines of 945 samples). However, the decoded picture quality degrades as the blocks get larger than about 64 samples or picture lines. This may be because large blocks cover a larger area of picture, so are more likely to encompass different picture material with a wide range of frequencies. We have found that a block size of 16 samples x 32 picture lines x 8 fields provides good results. However, a range of block sizes between 8 samples x 16 picture lines x 4 fields to 32 samples x 64 picture lines x 16 fields may be considered.

For good quality results it is desirable to use some sort of window function in filters of the kind illustrated by the multipliers 46, 54 in Figure 2. A raised cosine window with completely overlapping blocks may be employed. This has the advantage that no inverse windowing is required, as overlapping blocks are simply added together. Windowing in the temporal dimension, using non-overlapping blocks, may give a useful saving in processing and storage, at the expense of a small reduction in decoded picture quality. Other window functions could be used, and the block overlap need not be 100%.

One example of the invention has been described. Many modifications may be made to the system illustrated and the invention may be implemented in many ways different from that described.

## Claims

1. A method of filtering a sampled composite colour video signal to extract the composite chrominance component therefrom, the method comprising the steps of:
separating the signal into a plurality of multi-dimensional frequency components;
the method being **characterized by** the steps of:
comparing the amplitudes of components that are located at mirror images about the colour subcarrier in frequency space with each other;
determining the ratio of amplitudes of the components;
setting both components substantially to zero if one is less than a predetermined proportion of the other, thereby selecting frequency components that substantially represent the composite chrominance component; and
combining the resultant frequency components to provide a sampled output signal representing the chrominance signal.

2. A method of filtering a sampled composite colour video signal to extract the composite chrominance component therefrom, the method comprising the steps of:
separating the signal into a plurality of multi-dimensional frequency components;
the method being **characterized by** the steps of:
comparing the amplitudes of components that are located at mirror images about the colour subcarrier in frequency space with each other;
setting the amplitude of the larger of the compared components to that of the smaller, thereby selecting the frequency component that substantially represents the composite chrominance component; and
combining the resultant frequency components to provide a sampled output signal representing the chrominance signal.

3. A method according to claim 1 or 2, in which the frequency space is a three dimensional frequency space (horizontal-vertical-temporal).

4. A method according to claim 1 or 2, in which the frequency space is a two dimensional frequency space.

5. A method according to any preceding claim, in which the separating step comprises subjecting the sampled composite colour video signal to a time domain to frequency domain transformation, and the combining step comprises subjecting the resultant frequency components to a frequency domain to time domain transformation.

6. A method according to claim 5, in which the time domain to frequency domain and frequency domain to time domain transformations comprise a Fourier transform and an inverse Fourier transform.

7. A method according to claim 5 or 6, further comprising the steps of:
prior to the time domain to frequency domain transformation, arranging the samples of the sampled composite colour video signals into blocks; and
after the frequency domain to time domain transformation, re-arranging the samples back into sequential form.

8. A method according to claim 7, in which the blocks are three dimensional blocks of a size between 8 samples x 16 picture lines x 4 fields and 32 samples x 64 picture lines x 16 fields.

9. A method according to claim 7 or 8, in which the blocks overlap.

10. A method according to claim 7, 8 or 9, further comprising between the arranging step and the time domain to frequency domain transformation, applying a windowing function to block edges.

11. A method according to claim 10, in which the windowing function is a raised cosine function.

12. A method according to any of claims 1 to 11, in which the composite colour video signal is a PAL signal.

13. A method according to claim 12, in which the composite colour video signal is sampled at four times the colour subcarrier frequency.

14. A method according to any preceding claim, in which the composite colour video signal is an interlaced signal, the method further comprising the step of inserting lines of zero samples so as to make an orthogonal sampling structure prior to the time domain to frequency domain transformation.

15. Apparatus for filtering a sampled composite colour video signal to extract the composite chrominance component therefrom, comprising:
means for separating the signal into a plurality of multi-dimensional frequency components;
the apparatus being **characterized by**:
means for comparing the amplitudes of components which are located at mirror images about the colour subcarrier in frequency space with each other, determining the ratio of amplitudes of the components, and for setting both components substantially to zero if one is less than a predetermined proportion of the other, thereby selecting frequency components that substantially represent the composite chrominance component; and
means for combining the resultant frequency components to provide a sampled output signal representing the chrominance signal.

16. Apparatus for filtering a sampled composite colour video signal to extract the composite chrominance component therefrom, comprising:
means for separating the signal into a plurality of multi-dimensional frequency components;
the apparatus being **characterized by**:
means for comparing the amplitudes of components which are located at mirror images about the colour subcarrier in frequency space with each other, and for setting the amplitude of the larger of the compared components to that of the smaller, thereby selecting frequency components that substantially represent the composite chrominance component; and
means for combining the resultant frequency components to provide a sampled output signal representing the chrominance signal.

17. A composite colour video signal decoder, comprising:
an input for receiving a sampled composite colour video signal;
a subtracter having its non-inverting input coupled to the input; and
a chrominance filter coupled to the input and having its output coupled to the inverting input of the subtracter;
wherein the chrominance filter comprises apparatus in accordance with claim 15 or 16.

## Patentansprüche

1. Verfahren zum Filtern eines abgetasteten zusammengesetzten Farbvideosignals zum Extrahieren der zusammengesetzten Chrominanzkomponente daraus, wobei das Verfahren die folgenden Schritte beinhaltet:
Unterteilen des Signals in mehrere mehrdimensionale Frequenzkomponenten;
wobei das Verfahren durch die folgenden schritte **gekennzeichnet** ist:
Vergleichen der Amplituden von Komponenten miteinander, die sich an Spiegelbildern um den Farbsubträger im Frequenzraum befinden;
Ermitteln des Amplitudenverhältnisses der Komponenten;
Setzen beider Komponenten im Wesentlichen auf null, wenn eine kleiner ist als ein vorbestimmter Anteil der anderen, um **dadurch** Frequenzkomponenten zu wählen, die im Wesentlichen die zusammengesetzte Chrominanzkomponente repräsentieren; und
Kombinieren der resultierenden Frequenzkomponenten, um ein abgetastetes Ausgangssignal bereitzustellen, das das Chrominanzsignal repräsentiert.

2. Verfahren zum Filtern eines abgetasteten zusammengesetzten Farbvideosignals zum Extrahieren der zusammengesetzten Chrominanzkomponente daraus, wobei das Verfahren die folgenden Schritte beinhaltet:
Unterteilen des signals in mehrere mehrdimensionale Frequenzkomponenten;
wobei das Verfahren **gekennzeichnet ist durch** die folgenden Schritte:
Vergleichen der Amplituden von Komponenten miteinander, die sich an Spiegelbildern um den Farbsubträger im Frequenzraum befinden;
Setzen der Amplituden der größeren der verglichenen Komponenten auf die der kleineren, um **dadurch** die Frequenzkomponente zu wählen, die im Wesentlichen die zusammengesetzte Chrominanzkomponente repräsentiert; und
Kombinieren der resultierenden Frequenzkomponenten, um ein abgetastetes Ausgangssignal bereitzustellen, das das Chrominanzsignal repräsentiert.

3. Verfahren nach Anspruch 1 oder 2, wobei der Frequenzraum ein dreidimensionaler Frequenzraum (horizontal-vertikal-temporal) ist.

4. Verfahren nach Anspruch 1 oder 2, wobei der Frequenzraum ein zweidimensionaler Frequenzraum ist.

5. Verfahren nach einem der vorherigen Ansprüche, bei dem der Unterteilungsschritt das Unterziehen des abgetasteten zusammengesetzten Farbvideosignals einer Zeit-in-Frequenz-Domänentransformation und der Kombinationsschritt das Unterziehen der resultierenden Frequenzkomponenten einer Frecquenz-in-Zeit-Domänentransformation beinhaltet.

6. Verfahren nach Anspruch 5, wobei die Zeit-in-Frequenz-Domänen- und die Frequenz-in-Zeit-Domänentransformationen eine Fourier-Transformation und eine inverse Fourier-Transformation beinhalten.

7. Verfahren nach Anspruch 5 oder 6, das ferner die folgenden Schritte beinhaltet:
Anordnen, vor der Zeit-in-Frequenz-Domänentransformation, der Abtastsignale der abgetasteten zusammengesetzten Farbvideosignale in Blöcke; und
Neuordnen, nach der Frequenz-in-Zeit-Domänentransformation, der Abtastsignale wieder in eine sequentielle Form.

8. Verfahren nach Anspruch 7, wobei die Blöcke dreidimensionale Blöcke einer Größe zwischen 8 Samples x 16 Bildzeilen x 4 Felder und 32 Samples x 64 Bildzeilen x 16 Felder sind.

9. Verfahren nach Anspruch 7 oder 8, wobei die Blöcke einander überlappen.

10. Verfahren nach Anspruch 7, 8 oder 9, das ferner zwischen dem Anordnungsschritt und dem Zeit Frequenz-Domänentransformationsschritt das Anwenden einer Fensterfunktion auf Blockränder beinhaltet.

11. Verfahren nach Anspruch 10, wobei die Fensterfunktion eine potenzierte Kosinusfunktion ist.

12. Verfahren nach einem der Ansprüche 1 bis 11, wobei das zusammengesetzte Farbvideosignal ein PAL-Signal ist.

13. Verfahren nach Anspruch 12, bei dem das zusammengesetzte Farbvideosignal mit dem vierfachen der Farbsubträgerfrequenz abgetastet wird.

14. Verfahren nach einem der vorherigen Ansprüche, bei dem das zusammengesetzte Farbvideosignal ein Zeilensprungsignal ist, wobei das Verfahren ferner den Schritt des Einfügens von Nullzeilen-Samples beinhaltet, um eine orthogonale Abtaststruktur vor der Zeit-in-Prequenz-Domänentransformation vorzunehmen.

15. Vorrichtung zum Filtern eines abgetasteten zusammengesetzten Farbvideosignals zum Extrahieren der zusammengesetzten Chrominanzkomponente daraus, die Folgendes umfasst:
Mittel zum Unterteilen des Signals in mehrere mehrdimensionale Frequenzkomponenten;
wobei die Vorrichtung **gekennzeichnet ist durch**:
Mittel zum Vergleichen der Amplituden von Komponenten miteinander, die sich an Spiegelbildern um den Farbsubträger im Frequenzraum befinden, Ermitteln des Amplitudenverhältnisses der Komponenten, und zum Setzen beider Komponenten im Wesentlichen auf null, wenn eine kleiner ist als ein vorbestimmter Anteil der anderen, um **dadurch** Frequenzkomponenten zu wählen, die im Wesentlichen die zusammengesetzte Chrominanzkomponente repräsentieren; und
Mittel zum Kombinieren der resultierenden Frequenzkomponenten, um ein abgetastetes Ausgangssignal bereitzustellen, das das Chrominanzsignal repräsentiert.

16. Vorrichtung zum Filtern eines abgetasteten zusammengesetzten Farbvideosignals zum Extrahieren der zusammengesetzten Chrominanzkomponente davon, die Folgendes umfasst:
Mittel zum Unterteilen des Signals in mehrere mehrdimensionale Frequenzkomponenten;
wobei die Vorrichtung **gekennzeichnet ist durch**:
Mittel zum Vergleichen der Amplituden von Komponenten miteinander, die sich an Spiegelbildern um den Farbsubträger im Frequenzraum befinden, und zum Setzen der Amplituden der größeren der verglichenen Komponenten auf die der kleineren, um **dadurch** Frequenzkomponenten zu wählen, die im Wesentlichen die zusammengesetzte Chrominanzkomponente repräsentieren; und
Mittel zum Kombinieren der resultierenden Frequenzkomponenten, um ein abgetastetes Ausgangssignal bereitzustellen, das das chrominanzsignal repräsentiert.

17. Zusammengesetzter Farbvideosignal-Decoder, der Folgendes umfasst:
einen Eingang zum Empfangen eines abgetasteten zusammengesetzten Farbvideosignals;
einen Subtrahierer, dessen nichtinvertierender Eingang mit dem Eingang gekoppelt ist; und
ein Chrominanzfilter, das mit dem Eingang gekoppelt ist und dessen Ausgang mit dem invertierenden Eingang des Subtrahierers gekoppelt ist;
wobei das Chrominanzfilter eine Vorrichtung nach Anspruch 15 oder 16 umfasst.

## Revendications

1. Procédé de filtrage d'un signal vidéo couleur composite échantillonné pour en extraire la composante de chrominance composite, le procédé comprenant les étapes consistant à :
séparer le signal en une pluralité de composantes fréquentielles multidimensionnelles;
le procédé étant **caractérisé par** les étapes consistant à :
comparer l'une avec l'autre les amplitudes des composantes qui sont situées au niveau d'images miroirs autour de la sous-porteuse couleur dans l'espace fréquentiel;
déterminer le rapport des amplitudes des composantes;
mettre les deux composantes sensiblement à zéro si l'une est moins qu'une proportion prédéterminée de l'autre, sélectionnant ainsi des composantes fréquentielles qui représentent sensiblement la composante de chrominance composite; et
combiner les composantes fréquentielles résultantes pour donner un signal de sortie échantillonné représentant le signal de chrominance.

2. Procédé de filtrage d'un signal vidéo couleur composite échantillonné pour en extraire la composante de chrominance composite, le procédé comprenant les étapes consistant à :
séparer le signal en une pluralité de composantes fréqucntielles multidimensionnelles;
le procédé étant **caractérisé par** les étapes consistant à :
comparer l'une avec l'autre les amplitudes des composantes qui sont situées au niveau d'images miroirs autour de la sous-porteuse couleur dans l'espace fréquentiel;
mettre l'amplitude de la plus grande des composantes comparées, à l'amplitude de la plus petite, sélectionnant ainsi la composante fréquentielle qui représente sensiblement la composante de chrominance composite; et
combiner les composantes fréquentielles résultantes pour donner un signal de sortie échantillonné représentant le signal de chrominance.

3. Procédé selon la revendication 1 ou 2, dans lequel l'espace fréquentiel est un espace fréquentiel tridimensionnel (horizontal-vertical-temporel).

4. Procédé selon la revendication 1 ou 2, dans lequel l'espace fréquentiel est un espace fréquentiel bidimensionnel.

5. Procédé selon l'une quelconque des revendications précédentes, dans lequel l'étape de séparation comprend soumettre le signal vidéo couleur composite échantillonné à une transformation de domaine temporel en domaine fréquentiel, et l'étape de combinaison comprend soumettre les composantes fréquentielles résultantes à une transformation de domaine fréquentiel en domaine temporel.

6. Procédé selon la revendication 5, dans lequel les transformations de domaine temporel en domaine fréquentiel et de domaine, fréquentiel en domaine temporel, comprennent une transformation de Fourier et une transformation de Fourier inverse.

7. Procédé selon la revendication 5 ou 6, comprenant en outre les étapes consistant à :
avant la transformation de domaine temporel en domaine fréquentiel, arranger les échantillons des signaux vidéo couleur composites échantillonnés en des blocs; et
après la transformation de domaine fréquentiel en domaine temporel, réarranger les échantillons en une forme séquentielle.

8. Procédé selon la revendication 7, dans lequel les blocs sont des blocs tridimensionnels d'une taille d'entre 8 échantillons x 16 lignes d'image x 4 champs et 32 échantillons x 64 lignes d'image x 16 champs.

9. Procédé selon la revendication 7 ou 8, dans lequel les blocs se chevauchent.

10. Procédé selon la revendication 7, 8 ou 9, comprenant appliquer une fonction fenêtre aux bords des blocs entre l'étape d'arrangement et l'étape de transformation de domaine temporel en domaine fréquentiel.

11. Procédé selon la revendication 10, dans lequel la fonction fenêtre est une fonction en cosinus élevé.

12. Procédé selon l'une quelconque des revendications 1 à 11, dans lequel le signal vidéo couleur composite est un signal PAI.

13. Procédé selon la revendication 12, dans lequel le signal vidéo couleur composite est échantillonné à quatre fois la fréquence de la sous-porteuse couleur.

14. Procédé selon l'une quelconque des revendications précédentes, dans lequel le signal vidéo couleur composite est un signal entrelacé, le procédé comprenant en outre l'étape consistant à insérer des lignes d'échantillons nuls afin de faire une structure d'échantillonnage orthogonale avant la transformation de domaine temporel en domaine fréquentiel.

15. Appareil de filtrage d'un signal vidéo couleur composite échantillonné pour en extraire la composante de chrominance composite, comprenant :
des moyens pour séparer le signal en une pluralité de composantes fréquentielles multidimensionnelles;
l'appareil étant **caractérisé par** :
des moyens pour comparer l'une avec l'autre les amplitudes des composantes qui sont situées au niveau d'images miroirs autour de la sous-porteuse couleur dans l'espace fréquentiel, pour déterminer le rapport des amplitudes des composantes et pour mettre les deux composantes sensiblement à zéro si l'une est moins qu'une proportion prédéterminée de l'autre, sélectionnant ainsi des composantes fréquentielles qui représentent sensiblement la composante de chrominance composite; et
des moyens pour combiner les composantes fréquentielles résultantes afin de donner un signal de sortie échantillonné représentant le signal de chrominance.

16. Appareil de filtrage d'un signal vidéo couleur composite échantillonné pour en extraire la composante de chrominance composite, comprenant :
des moyens pour séparer le signal en une pluralité de composantes fréquentielles multidimensionnelles;
l'appareil étant **caractérisé par** :
des moyens pour comparer l'une à l'autre les amplitudes des composantes qui sont situées au niveau d'images miroirs autour de la sous-porteuse couleur dans l'espace fréquentiel et pour mettre l'amplitude de la plus grande des composantes comparées, à l'amplitude de la plus petite, sélectionnant ainsi des composantes fréquentielles qui représentent sensiblement la composante de chrominance composite; et
des moyens pour combiner les composantes fréquentielles résultantes pour donner un signal de sortie échantillonné représentant le signal de chrominance.

17. Décodeur de signal vidéo couleur composite, comprenant :
une entrée pour recevoir un signal vidéo couleur composite échantillonné;
un soustracteur ayant son entrée non inverseuse couplée à l'entrée; et
un filtre de chrominance couplé à l'entrée et ayant sa sortie couplée à l'entrée inverseuse du soustracteur;
dans lequel le filtre de chrominance comprend un appareil selon la revendication 15 ou 16.
